# EUROPEAN PATENT APPLICATION

(11) **EP 1 901 551 A2**
(43) Date of publication of application: **19.03.2008**
(21) Application number: 07116311.7
(22) Date of filing: 13.09.2007
(51) Int. Cl.: H04N 5/45

(54) **Video-information processing apparatus, video-information processing method, and computer program**

(30) Priority: 13.09.2006 JP 2006247599
(71) Applicant: Sony Corporation, Minato-ku Tokyo 108-0075 (JP)
(72) Inventor: Shimizu, Takayoshi, Tokyo 108-0075 (JP)
(74) Representative: Körber, Martin Hans

(57) **Abstract**

A video-information processing apparatus configured to amplify and output a video signal input from an external device, including the following elements: a plurality of video-signal input units configured to receive video signals as inputs; an input setting unit configured to set, from among the video signals input from the plurality of video-signal input units, a video signal to constitute a parent window and a video signal to constitute a child window; a picture in-picture-function executing unit configured to generate a picture-in-picture screen in which the child window is inset into the parent window in response to a picture-in-picture setting; and a video-signal output unit configured to convert a video signal constituting the parent window or the picture-in-picture screen to a signal format of a specified output destination and to output the converted signal.

## Description

### CROSS REFERENCES TO RELATED APPLICATIONS

The present invention contains subject matter related to Japanese Patent Application JP 2006-247599 filed in the Japanese Patent Office on September 13, 2006, the entire contents of which are incorporated herein by reference.

### BACKGROUND OF THE INVENTION

### 1. Field of the Invention

The present invention relates to a video-information processing apparatus which is connected to a plurality of content providing devices providing video and audio content and which is configured to switch between and among input audio signals and video signals in accordance with a user operation, apply predetermined processing on and amplify the input signals, and output the signals to a monitor display, a speaker, or the like, and to a video-information processing method and a computer program. More particularly, the present invention relates to a video-information processing apparatus, a video-information processing method, and a computer program for processing a plurality of pieces of video information input at the same time.

More specifically, the present invention relates to a video-information processing apparatus, a video-information processing method, and a computer program for processing, while reproducing and outputting currently selected input video information, video information input at the same time from an external device, and more particularly, to a video-information processing apparatus, a video-information processing method, and a computer program for enabling a user not to miss currently selected input video information and for processing other video information input at the same time from an external device.

### 2. Description of the Related Art

Recently, audio-visual (AV) receivers configured to amplify, reproduce, and output signals supplied from various content providing devices, such as a television tuner, a radio tuner, a media player configured to play various types of media such as compact discs (CDs) and digital versatile discs (DVDs), a videocassette recorder (VCR), a digital still camera, and a camcorder, have been widely spread. A plurality of content providing devices providing video and audio content is connected to an AV receiver, and the AV receiver switches between and among input audio signals and video signals in accordance with a user operation, applies predetermined processing on and amplify the input signals, and outputs the signals to an external device such as a monitor display or a speaker.

For example, a proposal has been made for an AV receiver in Japanese Unexamined Patent Application Publication No. 2003-152574. The AV receiver includes a memory card drive configured to read and write information from/to a memory card. For each individual user, function and setting information according to each user's preferences is stored on a memory card. On the basis of the function and setting information stored on the memory card, the AV receiver can be customized to that user's desired functions and settings.

Another proposal has been made in, for example, Japanese Unexamined Patent Application Publication No. 2006-4489 for an amplifying apparatus configured to store a remote-control light-reception signal and a reception terminal in association with each other and to send operation commands to a plurality of content reproducing apparatuses to simultaneously operate the content reproducing apparatuses on the basis of a plurality of user operations.

Although a plurality of content providing devices providing video content can be connected to the AV receiver, the AV receiver can basically display only one video input selected from among a plurality of inputs supplied from these external devices. The AV receiver has difficulty in displaying a plurality of video inputs at the same time on one monitor display.

In the case where a user watching a television program or a movie that is currently selected as an input wants to watch different video content, it is necessary to change the content to be displayed or the content providing device providing the content to be displayed.

In the case where urgent video information is input while the user is watching isochronous video content, such as video content received with a television tuner, it is necessary for the user to temporarily stop watching the isochronous content by operating the AV receiver and to change the display output over to the urgent video information.

While the urgent video information is being displayed on the monitor display, the display output of the video information, such as the video content received with the television tuner, which was originally being displayed is interrupted, and the user may miss a scene that the user wants to watch. In contrast, even in the case where urgent video information is input, if the AV receiver keeps displaying the original video content, such as the video content received with the television tuner, without changing the video-signal input source, the user fails to check the urgent video information. As a result, the user may fail to cope with an unforeseen accident and may suffer from damage since the user has not been informed of the information.

### SUMMARY OF THE INVENTION

It is desirable to provide an excellent video-information processing apparatus which is connected to a plurality of content providing devices providing video and audio content and which is configured to successfully process a plurality of pieces of video information input at the same time, and to provide an excellent video-information processing method and a computer program.

It is also desirable to provide an excellent video-information processing apparatus, an excellent video-information processing method, and a computer program for enabling a user not to miss currently selected video information and for processing other video information input at the same time from an external device.

According to a first embodiment of the present invention, there is provided a video-information processing apparatus configured to amplify and output a video signal input from an external device, including the following elements: a plurality of video-signal input means for receiving video signals as inputs; input setting means for setting, from among the video signals input from the plurality of video-signal input means, a video signal to constitute a parent window and a video signal to constitute a child window; picture-in-picture-function executing means for generating a picture-in-picture screen in which the child window is inset into the parent window in response to a picture-in-picture setting; and video-signal output means for converting a video signal constituting the parent window or the picture-in-picture screen to a signal format of a specified output destination and outputting the converted signal.

Video-information processing apparatuses, which are also called AV receivers, configured to amplify, reproduce, and output signals supplied from various content providing devices, such as a television tuner, a radio tuner, a media player configured to play various types of media such as CDs and DVDs, a VCR, a digital still camera, and a camcorder, have been widely spread.

Although an AV receiver in the related art is connected to a plurality of external content providing devices, the AV receiver can display only one selected video input and fails to simultaneously display a plurality of video inputs on a monitor display. In the case where a user watching a television program or a movie that is currently selected as an input wants to watch different video content, it is necessary to change the content to be displayed or the content providing device providing the content to be displayed. While the video input is being switched over, the user may miss a scene that the user wants to watch.

In contrast, the video-information processing apparatus according to the first embodiment of the present invention has a picture-in-picture (PiP), that is, a function of displaying a child window in a parent window. More specifically, the picture-in-picture-function executing means generates a picture-in-picture screen in which the child window is inset into the parent window in response to a picture-in-picture setting. A video signal constituting the picture-in-picture screen is converted to a signal format of a specified output destination, and the converted signal is output.

According to the first embodiment of the present invention, in the case where a user wants to watch break-in news on a disaster, an image supplied from a security monitoring camera, or video content distributed to a children's room, the picture-in-picture enables the user to simultaneously watch the parent window and the child window so that the user can check urgent video information without missing a favorable or important scene of the video content the user is currently watching.

The picture-in-picture-function executing means may generate the picture-in-picture screen by detecting an input signal format of the video signal constituting the child window, converting the format of the signal constituting the child window to the format of the signal constituting the parent window, and insetting the child window into the parent window.

The video-information processing apparatus may further include input means for receiving an instruction concerning a change in a position of the child window in the picture-in-picture screen as an input. The picture-in-picture-function executing means may change the signal constituting the child window, which has been converted to the format of the signal constituting the parent window, so that the coordinates of the child window are changed to a position in accordance with the instruction, and insets the child window into the parent window.

The video-information processing apparatus may further include input means for receiving an instruction concerning a change in a size of the child window in the picture-in-picture screen as an input. The picture-in-picture-function executing means may change the signal constituting the child window, which has been converted to the format of the signal constituting the parent window, so that the size of the child window is changed in accordance with the instruction, and insets the child window into the parent window.

According to the video-information processing apparatus of the first embodiment of the present invention, in the case where a user wants to check the details of video content displayed in the child window, this can be realized by exchanging the parent window and the child window or changing the size and/or position of the child window.

According to a second embodiment of the present invention, there is provided a computer-readable computer program allowing a computer to perform a video-information process of amplifying and outputting a video signal input from an external device, the process including the steps of setting, from among a plurality of input video signals, a video signal to constitute a parent window and a video signal to constitute a child window; generating a picture-in-picture screen in which the child window is inset into the parent window in response to a picture-in-picture setting; and converting a video signal constituting the parent window or the picture-in-picture screen to a signal format of a specified output destination and outputting the converted signal.

The computer program according to the second embodiment of the present invention defines a computer program written in a computer readable format so as to implement a predetermined process on a computer. In other words, by installing the computer program according to the second embodiment of the present invention on a computer, cooperative operations are performed on the computer, thereby achieving the same advantages as those of the video-information processing apparatus according to the first embodiment of the present invention.

According to the embodiments of the present invention, there is provided an excellent video-information processing apparatus which is connected to a plurality of content providing devices providing video and audio content and which is configured to successfully process a plurality of pieces of video information input at the same time, and there are provided an excellent video-information processing method and a computer program.

According to the embodiments of the present invention, there are provided an excellent video-information processing apparatus, an excellent video-information processing method, and a computer program for enabling a user not to miss currently selected video information and for processing other video information input at the same time from an external device.

According to the embodiments of the present invention, a user who is watching, from among a plurality of video inputs supplied from external devices to an AV receiver, a currently selected television program or movie can simultaneously view another video input, such as break-in news on a disaster or an image supplied from a security monitoring camera. Therefore, the user will not miss a scene that the user wants to watch, or it is not necessary for the user to enter an operation to change the viewing position. When the AV receiver has a high definition multimedia interface (HDMI) interface and an analog video output terminal, even an inexpensive, low-function television can enable a user to view two windows at the same time.

Further features of the present invention will become apparent from the following description of exemplary embodiments with reference to the attached drawings.

### BRIEF DESCRIPTION OF THE DRAWINGS

Fig. 1 schematically illustrates an environment in which an AV receiver is used;
Fig. 2 is a block diagram of the internal structure of the AV receiver, particularly illustrating a video-signal processing system;
Fig. 3 illustrates an exemplary animation operation of a picture-in-picture screen;
Fig. 4 illustrates an exemplary animation operation of the picture-in-picture screen;
Fig. 5 illustrates an exemplary animation operation of the picture-in-picture screen;
Fig. 6 illustrates an exemplary animation operation of the picture-in-picture screen; and
Fig. 7 is a flowchart of a process of displaying a picture-in-picture screen using the AV receiver.

### DESCRIPTION OF THE PREFERRED EMBODIMENTS

A preferred embodiment of the present invention will be described with reference to the drawings.

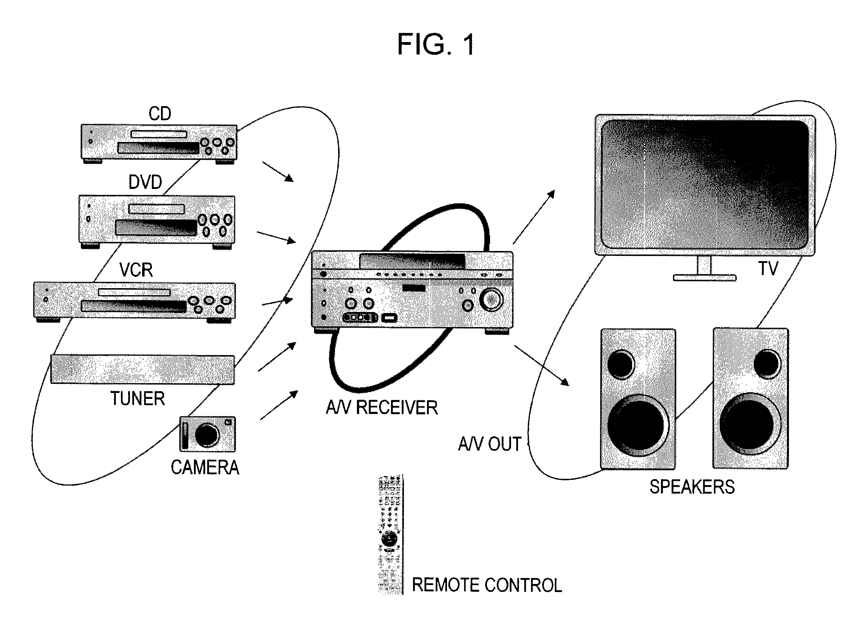

Fig. 1 schematically illustrates an environment in which an AV receiver is used. The AV receiver includes a plurality of terminals (all of which are not shown) for receiving and outputting digital and analog video and audio signals, such as HDMI input/output terminals, video input/output terminals, audio input/output terminals, separate (S) video input/output terminals, a serial port, and an RS-232C port. As illustrated in Fig. 1, the AV receiver is connected to a plurality of external content providing devices, such as a television tuner, a radio tuner, a media player configured to play various types of media such as CDs and DVDs, a VCR, a digital still camera, and a camcorder. The AV receiver amplifies video and audio signals and reproduces and outputs the video and audio signals to an HDMI monitor display, an analog video display, a speaker, or the like.

A user of the AV receiver can switch between and among audio signals and video signals to be amplified, reproduced, and output using the AV receiver by operating an infrared remote control or the like. According to the present embodiment, the AV receiver can receive video signals from a security monitoring camera and output video signals for distribution to a children's room.

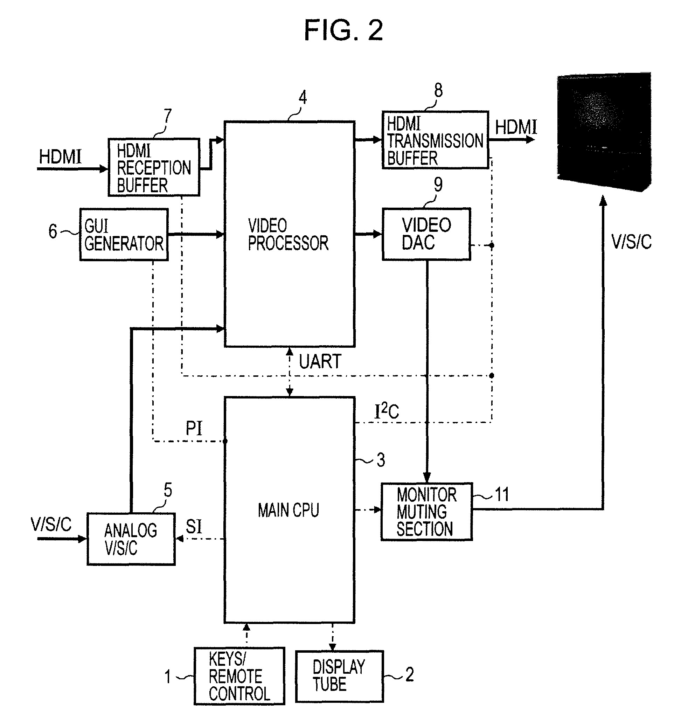

Fig. 2 illustrates an example of the internal structure of the AV receiver, particularly illustrating a video-signal processing system.

A main central processing unit (CPU) 3 controls the overall operation of the AV receiver in accordance with user operations entered by operating a user interface 1 including keys and/or a remote control and displays the contents of the user operations on a display tube 2.

The main CPU 3 selects a video signal to be input via a serial interface (SI), a parallel interface (PI), or an inter-integrated circuit (I²C) interface to a video processor 4 configured to render and process a video signal from among an analog V/S/C 5 input from an external device (where V denotes a composite signal (composite video blanking and sync or CVBS), S denotes an S signal (Y/C separation), and C denotes a component video input signal), a graphical-user-interface (GUI) video signal such as an on-screen-display (OSD) signal which is supplied from an internal GUI generator 6 and which indicates the setting status of the AV receiver, and a digital video signal which is received from an HDMI interface and stored in an HDMI reception buffer 7.

The main CPU 3 is connected to the video processor 4 via a universal asynchronous receiver transmitter (UART) interface and gives instructions to eliminate noise, execute a picture-in-picture function of insetting a child window into a parent window, and perform video processing such as scaling of the child window. The picture-in-picture processing will be described in detail later. The video processor 4 outputs video data, which has been subjected to video processing, to an HDMI transmission buffer 8 (provided that HDMI is specified as an output destination) or to a video digital-to-audio converter (DAC) 9 (provided that an analog video monitor is specified as an output destination).

The main CPU 3 is connected to the HDMI transmission buffer 8 and the video DAC 9 via the I²C interface. The HDMI transmission buffer 8 outputs the video signal to an HDMI monitor. The video DAC 9 converts the digital video data into an analog signal and outputs the analog signal to a monitor via a monitor muting section 11. The main CPU 3 controls the monitor muting section 11 via the serial interface (SI).

The AV receiver according to the present embodiment has a picture-in-picture (PiP), that is, a function of displaying a child window in a parent window. Accordingly, in the case where a user watching a television program or a movie that is currently selected as an input wants to watch different video content, such as break-in news on a disaster, an image supplied from a security monitoring camera, or video content distributed to a children's room, the picture-in-picture enables the user to simultaneously watch the two pieces of video content without missing a favorite or important scene of the video content the user is currently watching. If the user wants to check the details of the video content displayed in the child window, this can be realized by exchanging the child window with the parent window or changing the size and/or position of the child window.

The child window can receive various types of external video signals as inputs, such as a component signal, an S signal, a CVBS signal, an HDMI signal, various types of video content input from a personal computer (PC) in accordance with the Video Electronics Standards Association (VESA) standards, video content captured with a camera, game video content, and zone distribution video content.

The parent window and the child window can simultaneously display any combination of video inputs, and the video inputs displayed in the parent window and the child window can be exchanged for each other.

The size and position of the child window can be changed. A user operation to change the size and/or position of the child window can be entered with, for example, a cursor key (which can be moved vertically and horizontally) or a cross key of the remote control.

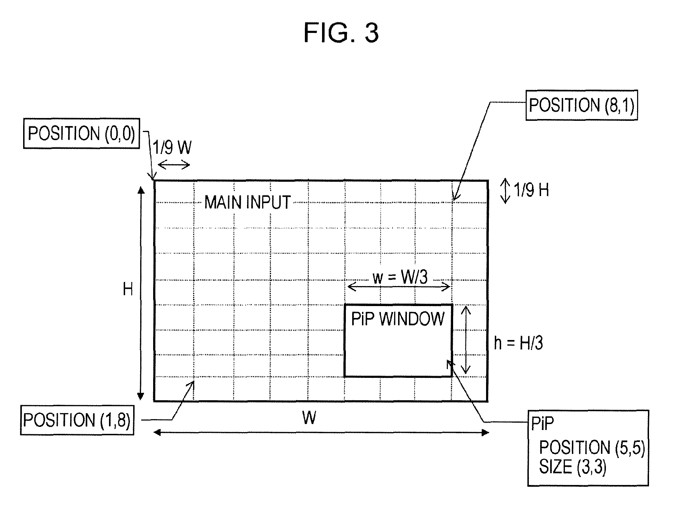

Figs. 3 to 6 illustrate examples of animation operation of a picture-in-picture screen. In the following description, the position of the child window is denoted by P(x, y), and the size of the child window is denoted by S(h, w) .

The coordinates of the position and size of the child window can be specified on a grid defined over the parent window in which the upper-left point of four corners of the parent window serves as the origin. The initial size of the child window is one-third of the height and the width of the parent window, as illustrated in Fig. 3.

Although values specified as the position and size of the child window are discrete values, it is preferable that the operation of changing the position and size be continuous (in animation) such that video images input to the child window may not be interrupted.

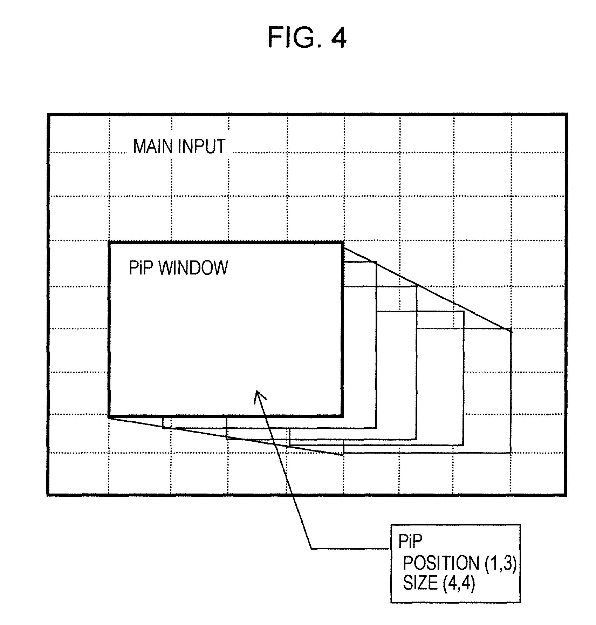

Fig. 4 illustrates exemplary animation in the case where an instruction to "simultaneously move and enlarge" the child window is given in the initial state illustrated in Fig. 3. In the example illustrated in Fig. 4, the position P and the size S of the child window are changed from {P(5, 5), S(3, 3)} to {P(1, 3), S(4, 4)}.

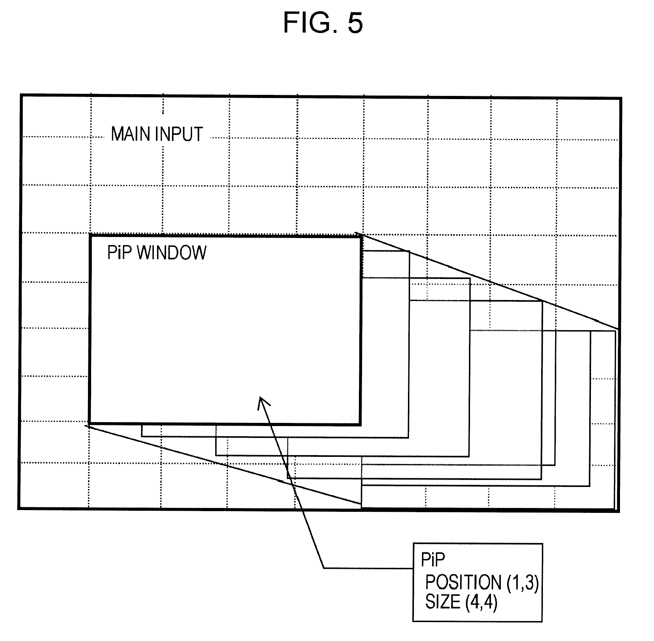

Fig. 5 illustrates exemplary animation in the case where an instruction to "move after enlarging" the child window is given in the initial state illustrated in Fig. 3. In the example illustrated in Fig. 5, the position P and the size S of the child window are changed from {P(5, 5), S(3, 3)} to {P(5, 5), S(4, 4)}, and to {P(1, 3), S(4, 4)}.

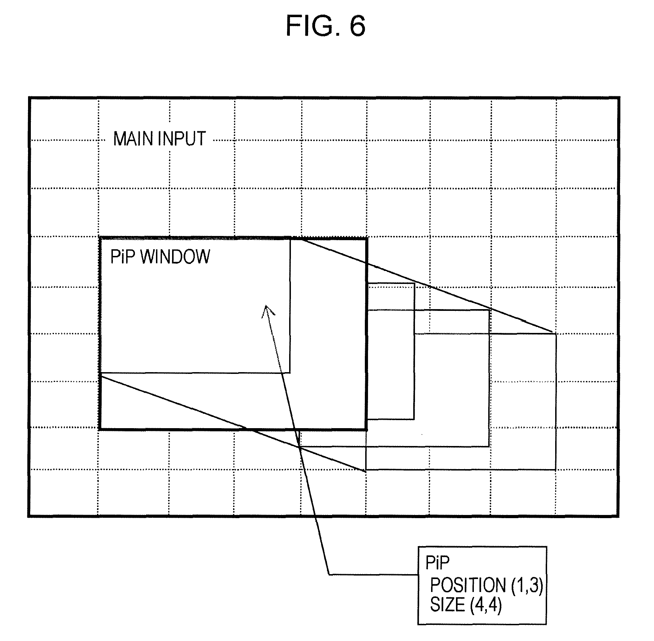

Fig. 6 illustrates exemplary animation in the case where an instruction to "enlarge after moving" the child window is given in the initial state illustrated in Fig. 3. In the example illustrated in Fig. 6, the position P and the size S of the child window are changed from {P(5, 5), S(3, 3)} to {P(1, 3), S(3, 3) }, and to {P(1, 3), S(4, 4) }.

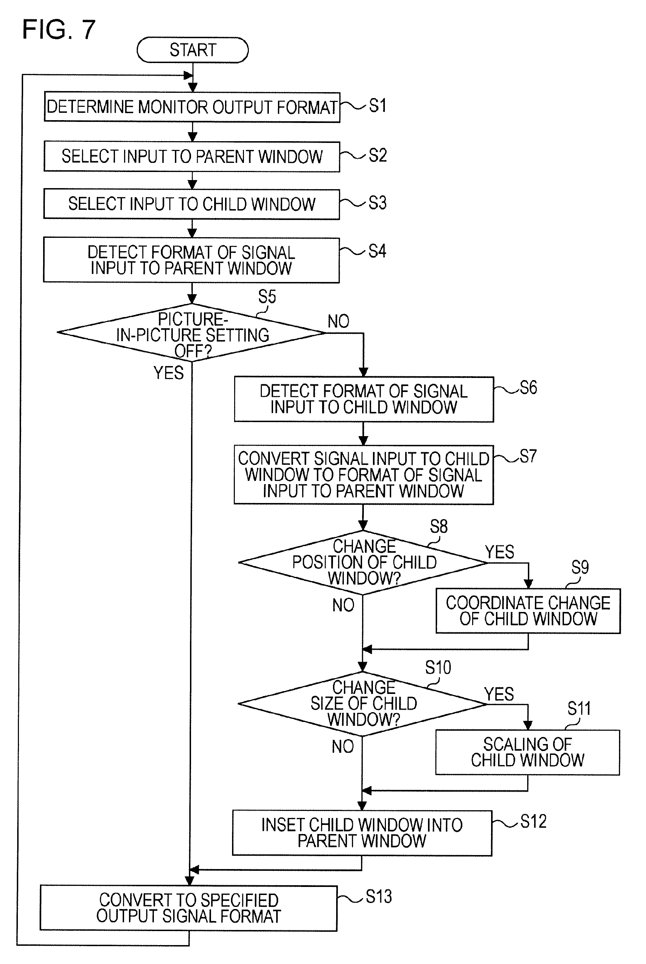

Fig. 7 is a flowchart of a process of displaying a picture-in-picture screen using the AV receiver.

In step S1, the monitor output format is set to HDMI or analog video.

In step S2, an input video signal constituting the parent window is set. In step S3, an input video signal constituting the child window is set.

In step S4, the input signal format of the video signal constituting the parent window is detected (step S4).

In step S5, whether the setting of the picture-in-picture is off is determined.

If the picture-in-picture setting is off ("Yes" in step S5), the format of the signal is converted to a specified output format (step S13). For example, in the case where an HDMI monitor display is specified as an output destination of the video signal, the video processor 4 converts the video information to an HDMI signal format and outputs the converted signal to the HDMI transmission buffer 8. In the case where an analog video monitor is specified as an output destination of the video signal, the video processor 4 converts the video information to a corresponding video signal format and outputs the converted signal to the video DAC 9. Thereafter, the flow returns to step S1, and a process similar to the above is repeated.

In contrast, in the case where the picture-in-picture setting is on ("No" in step S5), the input signal format of the video signal constituting the child window is detected (step S6). For example, in the case where a user operates the keys/remote control 1 to enter an instruction to display and output the child window, or in the case where the security monitoring camera captures an image of a suspicious object or an intruder, this triggers the picture-in-picture setting.

Next, the format of the input signal constituting the child window is converted to the format of the input signal constituting the parent window (step S7).

In the case where the user operates the keys/remote control 1 to enter an instruction to change the position of the child window ("Yes" in step S8), the coordinates of the child window are changed (step S9).

In the case where the user operates the keys/remote control 1 to enter an instruction to change the size of the child window ("Yes" in step S10), the scaling of the child window is changed (step S11). This changing of the size of the child window includes exchanging the child window and the parent window.

In step S12, the child window obtained in the foregoing manner is inset into the parent window.

In step S13, the signal is converted to a specified output format (step S13). For example, in the case where an HDMI monitor display is specified as an output destination of the video signal, the video processor 4 converts the video information to an HDMI signal format and outputs the converted signal to the HDMI transmission buffer 8. In the case where an analog video monitor is specified as an output destination of the video signal, the video processor 4 converts the video information to a corresponding video signal format and outputs the converted signal to the video DAC 9. Thereafter, the flow returns to step S1.

The present invention has been described in detail hereinabove in the context of specific embodiments thereof. It is to be understood, however, that modifications of or alternatives to the embodiments can be made by those skilled in the art without departing from the scope of the present invention.

Although the AV receiver according to the embodiment has been mainly described in the present specification, the scope of the present invention is not limited thereto. The present invention is similarly applicable to other types of apparatuses which are connected to a plurality of external content providing devices providing video and audio content and which are configured to process a plurality of pieces of video information simultaneously input from the external apparatuses.

In short, the present invention has been disclosed by way of examples, and the disclosure should not be construed as the restrictive one. Reference shall be made to the appended claims for delineation of the scope of the present invention.

## Claims

1. A video-information processing apparatus configured to amplify and output a video signal input from an external device, comprising:
a plurality of video-signal input means for receiving video signals as inputs;
input setting means for setting, from among the video signals input from the plurality of video-signal input means, a video signal to constitute a parent window and a video signal to constitute a child window;
picture-in-picture-function executing means for generating a picture-in-picture screen in which the child window is inset into the parent window in response to a picture-in-picture setting; and
video-signal output means for converting a video signal constituting the parent window or the picture-in-picture screen to a signal format of a specified output destination and outputting the converted signal.

2. The video-information processing apparatus according to Claim 1, wherein the picture-in-picture-function executing means generates the picture-in-picture screen by detecting an input signal format of the video signal constituting the child window, converting the format of the signal constituting the child window to the format of the signal constituting the parent window, and insetting the child window into the parent window.

3. The video-information processing apparatus according to claim 2, further comprising input means for receiving an instruction concerning a change in a position of the child window in the picture-in-picture screen as an input,
wherein the picture-in-picture-function executing means changes the signal constituting the child window, which has been converted to the format of the signal constituting the parent window, so that the coordinates of the child window are changed to a position in accordance with the instruction, and insets the child window into the parent window.

4. The video-information processing apparatus according to claim 2, further comprising input means for receiving an instruction concerning a change in a size of the child window in the picture-in-picture screen as an input,
wherein the picture-in-picture-function executing means changes the signal constituting the child window, which has been converted to the format of the signal constituting the parent window, so that the size of the child window is changed in accordance with the instruction, and insets the child window into the parent window.

5. A video-information processing method for amplifying and outputting a video signal input from an external device, comprising the steps of:
setting, from among a plurality of input video signals, a video signal to constitute a parent window and a video signal to constitute a child window;
generating a picture-in-picture screen in which the child window is inset into the parent window in response to a picture-in-picture setting; and
converting a video signal constituting the parent window or the picture-in-picture screen to a signal format of a specified output destination and outputting the converted signal.

6. The video-information processing method according to claim 5, wherein the generating step includes generating the picture-in-picture screen by detecting an input signal format of the video signal constituting the child window, converting the format of the signal constituting the child window to the format of the signal constituting the parent window, and insetting the child window into the parent window.

7. The video-information processing method according to claim 6, further comprising the step of receiving an instruction concerning a change in a position of the child window in the picture-in-picture screen as an input,
wherein the generating step includes changing the signal constituting the child window, which has been converted to the format of the signal constituting the parent window, so that the coordinates of the child window are changed to a position in accordance with the instruction, and insetting the child window into the parent window.

8. The video-information processing method according to claim 6, further comprising the step of receiving an instruction concerning a change in a size of the child window in the picture-in-picture screen as an input,
wherein the generating step includes changing the signal constituting the child window, which has been converted to the format of the signal constituting the parent window, so that the size of the child window is changed in accordance with the instruction, and insetting the child window into the parent window.

9. A computer-readable computer program allowing a computer to perform a video-information process of amplifying and outputting a video signal input from an external device, comprising the steps of:
setting, from among a plurality of input video signals, a video signal to constitute a parent window and a video signal to constitute a child window;
generating a picture-in-picture screen in which the child window is inset into the parent window in response to a picture-in-picture setting; and
converting a video signal constituting the parent window or the picture-in-picture screen to a signal format of a specified output destination and outputting the converted signal.

10. A video-information processing apparatus configured to amplify and output a video signal input from an external device, comprising:
a plurality of video-signal input units configured to receive video signals as inputs;
an input setting unit configured to set, from among the video signals input from the plurality of video-signal input units, a video signal to constitute a parent window and a video signal to constitute a child window;
a picture-in-picture-function executing unit configured to generate a picture-in-picture screen in which the child window is inset into the parent window in response to a picture-in-picture setting; and
a video-signal output unit configured to convert a video signal constituting the parent window or the picture-in-picture screen to a signal format of a specified output destination and to output the converted signal.
